# EUROPEAN PATENT APPLICATION

(11) **EP 2 348 512 A1**
(43) Date of publication of application: **27.07.2011**
(21) Application number: 11161777.5
(22) Date of filing: 19.07.2007
(51) Int. Cl.: H01B 1/06, H01B 13/00, H01M 8/10

(54) **Evaluation method of ionic conductivity of a polymer electrolyte membrane**

(30) Priority: 20.07.2006 JP 2006198573; 08.08.2006 JP 2006215992
(62) Divisional of application: 07768476.9
(71) Applicant: SUMITOMO CHEMICAL CO., LTD., Tokyo 104-8260 (JP)
(72) Inventor: Ishitobi, Masamitsu, Tsukuba-shi Ibaraki 305-0045 (JP); Nodono, Mitsunori, Tsukuba-shi Ibaraki 305-0045 (JP); Yamashita, Yasuhiro, Tsukuba-shi Ibaraki 305-0045 (JP)
(74) Representative: Henkel, Feiler & Hänzel

(57) **Abstract**

An evaluation method of an ion conductivity of a polymer electrolyte membrane having a micro phase separation structure containing a region having an ion conductive group, comprising:
a step of calculating a first passthrough critical value in the membrane thickness direction obtained at the cross-section along the membrane thickness direction and a second passthrough critical value in the membrane surface direction obtained at the cross-section in the near surface region of the polymer electrolyte membrane; and
a step of comparing the first passthrough critical value and the second passthrough critical value.

## Description

### TECHNICAL FIELD

The present invention particularly relates to a polymer electrolyte membrane having a micro phase separation structure and its producing method, a membrane-electrode assembly and a fuel cell using the polymer electrolyte membrane, and an evaluation method of ionic conductivity of the polymer electrolyte membrane.

### BACKGROUND ART

In recent years, the expectation for fuel cells has increased as a clean power supply source to response to environmental problems. Particularly, a polymer electrolyte fuel cell has attracted attention because it is capable of operating at a low temperature and being made into a small size and light weight.

The polymer electrolyte fuel cell is basically configured with two catalyst electrodes and a polymer electrolyte membrane sandwiched by these catalyst electrodes. In the operation of this fuel cell, first, hydrogen used as a fuel is ionized at one of the electrodes into a hydrogen ion, this hydrogen ion is then diffused into the polymer electrolyte membrane, and then it bonds with oxygen that is the other fuel at the other electrode. At this time, when the two electrodes are connected with an outer circuit, current flows into this outer circuit, and with this, power is supplied to the outside. In such operation, the polymer electrolyte membrane separates hydrogen and oxygen that are fuel gases while diffusing the hydrogen ions, and plays a role of shutting out the flow of electrons.

A fluoride polymer containing a super strong acid group that is represented by Nafion (registered trademark, produced by DuPont) has been known as an example of a polymer electrolyte used in the polymer electrolyte membrane of the polymer electrolyte fuel cell.

As for ion conduction in the polymer electrolyte membrane, a channel structure formed by an ion conductive component in the membrane is considered to be extremely important. In a perfluorosulfonic acid polymer membrane that is one type of the fluoride polymer containing a super strong acid group described above, it is considered that sulfonic acid groups gather, a cluster structure having some periodic structure is formed, and an ion is conducted through the cluster network as shown in p. 61 in "Fuel Cell" edited by The Chemical Society of Japan published by Maruzen for example. In this case, the spatial arrangement of ion conductive sites is important in the polymer electrolyte membrane.

From such a viewpoint, the polymer electrolyte is preferably a block copolymer in which one polymer chain is formed by two or more types of polymer components (block chains) that are insoluble to each other forming a covalent bond. According to this block copolymer, the arrangement of chemically different components can be controlled at a nano scale size. That is, in the block copolymer, a phase separation is carried out between regions (micro domains) consisting of each block chain with a short-range interaction due to repulsion between block chains that are chemically different from each other. At this time, each micro domain is arranged in a specific order with a long-range interaction due to the block chains forming a covalent bond to each other. The structure produced by the micro domains consisting of each block chain gathering is called a micro phase separation structure.

The polymer electrolyte membrane consisting of the block copolymer is generally formed by developing a solution of the block copolymer dissolved into an organic solvent onto an appropriate substrate, and then removing the solvent. In this case, the micro domains may be mutually incorporated and a spongiform structure may be formed inside of the membrane immediately after the formation as shown in, for example, Hashimoto T., Koizumi S., Hasegawa H., Izumitani T., Hyde S. T., Macromolecules, 1992 (25) 1433.

The polymer electrolyte membrane used in the fuel cell preferably has high ion conductivity especially in the thickness direction in order to obtain high output. On the other hand, expansion on water absorption is preferably small in order to secure sufficient durability. The polymer electrolyte membrane having the spongiform micro phase separation structure as described above is known to satisfy both these characteristics well. Further, for example, Japanese Patent Application Laid-Open No. 2003-142125 shows that excellent ion conductivity can be obtained with an ion conductive membrane having a micro phase separation structure arranged so that a channel containing an ion conductive component passes through the membrane.

### DISCLOSURE OF THE INVENTION

In recent years, further improvement of the output of the fuel cell has been required, and because of this, it has been necessary for the polymer electrolyte membrane to have further superior ion conductivity than the conventional one. However, it is difficult to easily obtain a polymer electrolyte membrane sufficiently excellent in ion conductivity in the thickness direction with the conventional producing method of the polymer electrolyte membrane. Further, conventionally, the structure of the polymer electrolyte membrane excellent in ion conductivity in the thickness direction has not been sufficiently solved.

The present invention has been made in view of such situation, and its object is to provide a producing method of a polymer electrolyte membrane, which can easily obtain a polymer electrolyte membrane and a near surface region of the polymer electrolyte membrane excellent in ion conductivity, especially ion conductivity in the thickness direction. An object of the present invention is also to provide a polymer electrolyte membrane having excellent ion conductivity in the thickness direction, as well as a membrane-electrode assembly and a fuel cell using the same.

In order to achieve the objects, as a result of the present inventor's devoted research, it has found that in a producing step of a polymer electrolyte membrane, the polymer electrolyte membrane in which a near surface region has a specified structure and that with this, the ion conductivity in the thickness direction becomes good can be obtained by appropriately controlling evaporation of the solvent, and the present invention has been led to completion.

That is, the producing method of the polymer electrolyte membrane of the present invention is a producing method of a polymer electrolyte membrane having a micro phase separation structure, and includes an evaporating step of evaporating a solvent from a solution containing the polymer electrolyte, which is characterized in that the time from start to completion of the evaporation of the solvent is 60 minutes or less.

In such producing method of the polymer electrolyte membrane, it is not exactly clear, but the micro domain containing an ion conductive group is considered by its behavior when the solvent evaporates to be easily arranged along the thickness direction in the near surface region of the polymer electrolyte membrane. As a result, the polymer electrolyte membrane thus obtained has excellent ion conductivity in the thickness direction as a whole.

In the producing method of the polymer electrolyte membrane of the present invention, the boiling point of the solvent used in the evaporating step is preferably 120°C to 250°C. By evaporating the solvent having such boiling point with the condition, a more preferable structure of the near surface region can be obtained.

In the evaporating step, the solvent is preferably evaporated with a temperature condition of a higher temperature than the freezing point of the solvent and a temperature that is 50°C higher than the boiling point of the solvent. In this way, the evaporation of the solvent can easily occur so that the structure as described above can be easily formed.

The solvent is preferable at least one type of solvent selected from a group consisting of N,N-dimethylformamide, N,N-dimethylacetoamide, N-methyl-2-pyrrolidone, and dimethylsulfoxide. These solvents tend to show especially preferable behavior of evaporation in the above-described condition.

The polymer electrolyte membrane of the present invention is obtained with the producing method of the present invention, has a good structure of the near surface region, and has excellent ion conductivity in the membrane thickness direction.

The polymer electrolyte membrane of the present invention specifically preferably has a structure as follows. That is, it is a polymer electrolyte membrane having a micro phase separation structure including a region having an ion conductive group, and is characterized in that a first passthrough critical value in the membrane thickness direction obtained at a cross-section along the membrane thickness direction in its near surface region is less than or equal to a second passthrough critical value in the surface direction obtained at this cross-section, that
the first passthrough critical value is a value shown by (the number of first unit regions/the total number of first and second unit regions) when a process is performed of dividing a shaded image having a shade that corresponds to the amount of the ion conductive group obtained by observing the cross-section so that a constant unit region is repeated and of giving a shading variable that corresponds to the level of the shade to each of the unit region, and when the value on the side where there are the most ion conductive groups is set as the standard value when the unit regions are classified into a first unit region having a shading variable on the side where there are more ion conductive groups than the shading variable corresponds to the standard value and a second unit region having a shading variable on the side where there are fewer ion conductive groups than the shading variable corresponds to the standard value with a prescribed shading variable as the standard value so that the first unit region is continuously arranged to connect two sides that are facing in the membrane thickness direction in the shaded image, and that
the second passthrough critical value is a value shown by (the number of first unit regions/the total number of first and second unit regions) when a process is performed of dividing a shaded image having a shade that corresponds to the amount of the ion conductive group obtained by observing the same cross-section so that a constant unit region is repeated and of giving a shading variable that corresponds to the level of the shade to each of the unit region, and when the value on the side where there are the most ion conductive groups is set as the standard value when the unit regions are classified into a first unit region having a shading variable on the side where there are more ion conductive groups than the shading variable corresponds to the standard value and a second unit region having a shading variable on the side where there are fewer ion conductive groups than the shading variable corresponds to the standard value with a prescribed shading variable as the standard value so that the first unit region is continuously arranged to connect two sides that are facing in the membrane surface direction in the shaded image. Here, "the near surface region" means a region near to at least one surface of the polymer electrolyte membrane.

Such polymer electrolyte membrane of the present invention has a structure in which the region having the ion conductive group is arranged in the membrane thickness direction rather than the membrane surface direction in the near surface region. Then, the polymer electrolyte membrane having such structure of the near surface region has excellent ion conductivity in the membrane thickness direction over the entire film.

In the polymer electrolyte membrane of the present invention, the shaded image is preferably obtained by observing a stained polymer electrolyte membrane with an electron staining method using a transmission electron microscope. With this, when the region having the ion conductive group is stained, as the higher the concentration of the ion conductive group is, the darker the shade image can be obtained.

The first passthrough critical value is preferably 0.55 or less, more preferably 0.53 or less, and further preferably 0.51 or less. Thus, even more excellent ion conductivity in the membrane thickness direction can be obtained.

The near surface region in which the passthrough critical values are observed is preferably a region at a depth from the surface of the polymer electrolyte membrane to 1000 nm. With the first and the second passthrough critical values satisfying the above-described condition in the region to such depth, the ion conductivity in the membrane thickness direction of the polymer electrolyte membrane is better.

In the polymer electrolyte membrane of the present invention, the first passthrough critical value obtained in the region outside the range of the near surface region described above is preferably 0.55 or less, more preferably 0.53 or less, further preferably 0.45 or less, and especially preferably 0.40 or less. Thus, for example, the region having the ion conductive group is arranged along the membrane thickness direction even at a position that is deeper than the near surface region. As a result, the ion conductivity in the membrane thickness direction improves even more.

In the polymer electrolyte membrane of the present invention, the length of at least one direction along the membrane surface direction is more preferably 1 m or more, and seamless. With such polymer electrolyte membrane, for example, a large number of polymer electrolyte membranes with a size that is used in a fuel cell can be obtained from one membrane, and it is effective for industrial production. From the viewpoint of this productivity, the polymer electrolyte membrane more preferably has a length in at least one direction of 5 m or more and is seamless, and further preferably has a length in at least one direction of 10 m or more and is seamless.

More specifically, the polymer electrolyte membrane of the present invention is preferably configured with a polymer electrolyte membrane containing a block copolymer having a segment containing an ion conductive group and a segment not having an ion conductive group. Such polymer electrolyte membrane easily takes a micro phase separation structure composed of a region having an ion conductive group (a micro domain) and a region not having an ion conductive group, and the structure of the present invention is easily formed.

The block copolymer contained in the polymer electrolyte membrane has more preferably a polyarylene structure. The polymer electrolyte membrane containing such block copolymer is excellent in ion conductivity.

More specifically, the block copolymer preferably includes a repeated structure shown by the following formula (1) as the segment containing an ion conductive group. Further, a repeated structure shown by the following formula (2) is more preferably included as the segment not having an ion conductive group. The block copolymer having these structures exhibits especially excellent ion conductivity as a polymer electrolyte.

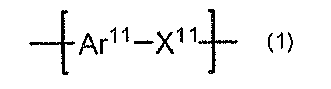

[In the formula, Ar¹¹ represents an arylene group having at least a cation exchange group as a substituent, and X¹¹ represents a single bond, an oxy group, a thioxy group, a carbonyl group, or a sulfonyl group.]

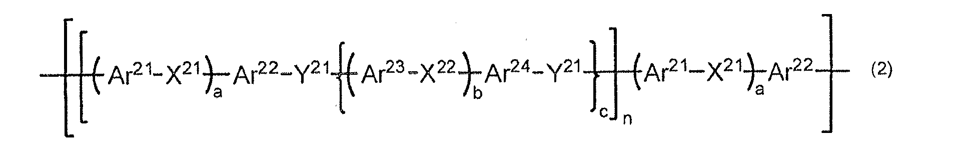

[In the formula, each of Ar²¹, Ar²², Ar²³, and Ar²⁴ independently represents an arylene group that may have a substituent other than an ion conductive group, each of X²¹ and X²² independently represents a single bond or a covalent group, each of Y²¹ and Y²² independently represents an oxygen atom or a sulfur atom, each of a, b, and c is independently 0 or 1, and n is a positive integer.]

The present invention also provides a membrane-electrode assembly and a fuel cell using the polymer electrolyte membrane of the present invention. That is, the membrane-electrode assembly of the present invention is provided with one pair of catalyst layers and the polymer electrolyte membrane of the present invention arranged between these catalyst layers. The fuel cell of the present invention is characterized to be provided with an anode, a cathode, and the polymer electrolyte membrane of the present invention arranged between them. The latter fuel cell is provided with the membrane-electrode assembly of the present invention.

Such fuel cell is provided with the polymer electrolyte membrane of the present invention, and it exhibits high output since the polymer electrolyte membrane of the present invention has excellent ion conductivity in the membrane thickness direction as described above.

The present invention also provides an evaluation method of the ion conductivity of the polymer electrolyte membrane based on the first and the second passthrough critical values described above. That is, the evaluation method of the ion conductivity of the polymer electrolyte membrane of the present invention is an evaluation method of the ion conductivity of the polymer electrolyte membrane having a micro phase separation structure containing a region having an ion conductive group, which has a step of calculating the first passthrough critical value in the membrane thickness direction obtained at the cross-section along the membrane thickness direction and the second passthrough critical value in the membrane surface direction obtained at the same cross-section as described above in the near surface region of the polymer electrolyte membrane and a step of comparing the first passthrough critical value and the second passthrough critical value, and is characterized in that
the first passthrough critical value is a value shown by (the number of first unit regions/the total number of first and second unit regions) when a process is performed of dividing a shaded image having a shade that corresponds to the amount of the ion conductive group obtained by observing the cross-section so that a constant unit region is repeated and of giving a shading variable that corresponds to the level of the shade to each of the unit region, and when the value on the side where there are the most ion conductive groups is set as the standard value when the unit region is classified into a first unit region having a shading variable on the side where there are more ion conductive groups and a second unit region having a shading variable on the side where there are fewer ion conductive groups with a prescribed shading variable as the standard value so that the first unit region is continuously arranged to connect two sides that are facing in the membrane thickness direction in the shaded image, and that
the second passthrough critical value is a value shown by (the number of first unit regions/the total number of first and second unit regions) when a process is performed of dividing a shaded image having a shade that corresponds to an amount of the ion conductive group obtained by observing the same cross-section so that a constant unit region is repeated and of giving a shading variable that corresponds to the level of the shade to each of the unit region, and when the value on the side where there are the most ion conductive groups is set as the standard value when the unit region is classified into a first unit region having a shading variable on the side where there are more ion conductive groups and a second unit region having a shading variable on the side where there are fewer ion conductive groups with a prescribed shading variable as the standard value so that the first unit region is continuously arranged to connect two sides that are facing in the surface direction in the shaded image.

As a result of such evaluation, if the first passthrough critical value is less than or equal to the second passthrough critical value, the polymer electrolyte membrane can be judged to have excellent ion conductivity especially in the membrane thickness direction as described above. In the evaluation, since the value of "the number of first unit regions/the total number of first and second unit regions" that is the first or the second passthrough critical value is determined by the size relationship of the set shaded image, the value of the shading variable itself, that is the influence from the shading level of the acquired shaded image, is small. Therefore, according to the evaluation method, a stable evaluation can be performed without being influenced by the acquiring condition of the shaded image (the level of staining and the method of acquiring the image), and the like.

According to the present invention, a producing method of a polymer electrolyte membrane can be provided that can easily obtain the near surface region of a polymer electrolyte membrane and a polymer electrolyte membrane having excellent ion conductivity, especially ion conductivity in the membrane thickness direction. Further, provided can be a polymer electrolyte membrane having more excellent ion conductivity in the membrane thickness direction that is obtained with such producing method, and a membrane-electrode assembly and a fuel cell using this.

### BRIEF DESCRIPTION OF THE DRAWINGS

Fig. 1 is a drawing showing a binarized image that is obtained when a prescribed standard value is set.
Fig. 2 is a drawing schematically showing a cross-sectional configuration of the fuel cell of the preferred embodiment.

### EXPLANATION OF THE REFERENCE NUMERALS

10···FUEL CELL, 12···POLYMER ELECTROLYTE MEMBRANE, 14a, 14b···CATALYST LAYER, 16a, 16b···GAS DIFFUSION LAYER, 18a, 18b···SEPARATOR.

### BEST MODE FOR CARRYING OUT THE INVENTION

Preferred embodiment of the present invention will be explained below.

### (Polymer Electrolyte)

First, a preferred embodiment of the polymer electrolyte constituting the polymer electrolyte membrane will be explained. The polymer electrolyte of the present embodiment has an anion conductive group, and when being made into a polymer electrolyte membrane, it can configure a micro phase separation structure including at least two phases of a region having this ion conductive group (micro domain) and a region not substantially having an ion conductive group (micro domain).

The ion conductive group is a functional group that can generate ion conduction, especially proton conduction when forming a polymer electrolyte membrane, and is represented with an ion exchange group. This ion exchange group may be either of a cation exchange group (acid group) or an anion exchange group (basic group). However, the cation exchange group is preferable from the viewpoint of obtaining high proton conductivity.

Examples of the cation exchange group include -SO₃H, -COOH, -PO(OH)₂, -O-PO(OH)₂, -POH(OH), -SO₂NHSO₂-, and - Ph(OH) (Ph represents a phenyl group). On the other hand, examples of the anion exchange group include -NH₂, -NHR, - NHR', -NRR'R"⁺, and -NH₃⁺ (each of these R, R', and R" independently represents an alkyl group, a cycloalkyl group, or an aryl group). One part or the entirety of these ion exchange groups may form a salt with a counter ion.

The ion exchange group in the polymer electrolyte influences the ion conductivity of the polymer electrolyte membrane. However, a preferred content thereof depends on the structure of the polymer electrolyte. For example, in the present embodiment, the contained amount of the ion exchange group of the polymer electrolyte is preferably 0.5 to 4.0 meq/g, and more preferably 1.0 to 2.8 meq/g, when represented in the ion exchange capacity. With the ion exchange capacity of the polymer electrolyte being 0.5 meq/g or more, sufficient ion (proton) conductivity can be obtained. Further, with the ion exchange capacity being 4.0 meq/g or less, water resistance in the case the polymer electrolyte is made into a polymer electrolyte membrane tends to be excellent.

The molecular weight of the polymer electrolyte is preferably 5000 to 1000000 and more preferably 15000 to 400000 when represented in a number average molecular weight of polystyrene conversion. Thus, sufficient ion conductivity can be obtained.

Both a fluoride polymer electrolyte such as Nafion containing fluorine in the main chain structure and a hydrocarbon based polymer electrolyte that does not contain fluorine in the main chain structure can be applied to the polymer electrolyte. However, the hydrocarbon based polymer electrolyte is preferable. The polymer electrolyte may contain a combination of a fluoride one and a hydrocarbon based one, but, in this case, the hydrocarbon based one is preferably contained as the main component.

Examples of the hydrocarbon based polymer electrolyte include a polyimide based, a polyarylene based, a polyethersulfone based, and a polyphenylene based polymer electrolyte. These may be contained alone, or in combination of two or more types.

More specifically, the polymer electrolyte preferably contains a block copolymer having a segment containing an ion conductive group and a segment not having an ion conductive group. The term "not having an ion conductive group" means substantially not having an ion conductive group, and the ion conductive group may be contained if a level thereof is at a level that the ion conductivity is not manifested. For example, the case that a segment has an average of about 0.05 or less of an ion conductive group per one repeated unit configuring the segment is judged to correspond to the segment "not having an ion conductive group".

The polyarylene based hydrocarbon polymer electrolyte contains a block copolymer having a polyarylene structure (hereinafter referred to as "a polyarylene based block copolymer"), for example. An example of such polyarylene based block copolymer includes one having a repeated structure shown by the formula (1) as the segment having an ion conductive group.

The repeated structure shown by the formula (1) has a cation exchange group that bonds to an arylene group in the group represented by Ar¹¹ as the ion conductive group. The arylene group in this repeated structure may have an alkyl group having 1 to 20 carbon atoms, an alkoxy group having 1 to 20 carbon atoms, an aryl group having 6 to 20 carbon atoms, or an aryloxy group having 6 to 20 carbon atoms as a substituent other than the cation exchange group. These substituents may further have a substituent. A phenylene group or a biphenylene group is preferable as the arylene group.

The polyarylene based block copolymer preferably contains a segment having the repeated structure shown by the formula (2) as the segment not having an ion conductive group. The arylene groups represented by Ar²¹, Ar²², Ar²³, and Ar²⁴ in such repeated structure may have the same substituent as the Ar¹¹ other than an ion conductive group.

This substituent is more preferably an alkyl group having 1 to 18 carbon atoms, an alkoxy group having 1 to 10 carbon atoms, an aryl group having 6 to 10 carbon atoms, an aryloxy group having 6 to 18 carbon atoms, or an acyl group having 2 to 20 carbon atoms. X²¹ and X²² in this repeated structure does not preferably have an ion conductive group. In the formula (2), n is preferably an integer of 5 or more.

Such polyarylene based block copolymer can be synthesized by generating a polymerization by a condensation reaction between precursors of each segment described above. In a producing method of this polyarylene based block copolymer, the segment having an ion conductive group may be formed by using the precursor in which the ion conductive group is introduced before the polymerization, or may be formed by introducing the ion conductive group to the segment after polymerizing the precursor not having an ion conductive group.

In a producing method of introducing the ion conductive group before the polymerization, a compound represented by the following formula (3) that is the precursor of the segment having an ion conductive group and a compound represented by the following formula (4) that is the precursor of the segment not having an ion conductive group are polymerized.

Q³¹-Ar¹¹-Q³² (3)

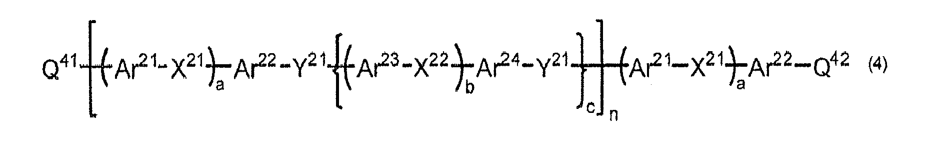

In the formulas (3) and (4), Ar¹¹, Ar²¹ to Ar²⁴, X²¹, Y²¹, Y²², a, b, c, and n are as describe above. Each of Q³¹, Q³², Q⁴¹, and Q⁴² is independently a group that is capable of generating the condensation reaction to each other, and is a group that is released during this condensation reaction. A preferred example of these groups is a halogen atom.

Examples of the compound represented by the formula (3) include 2,4-dichlorobenzene sulfonic acid, 2,5-dichlorobenzene sulfonic acid, 3,5-dichlorobenzene sulfonic acid, 2,4-dibromobenzene sulfonic acid, 2,5-dibromobenzene sulfonic acid, and 3,5-dibromobenzene sulfonic acid.

The precursor of the segment having an ion conductive group used in this method may be protected with a form of which the ion conductive group is a salt or, for example, a form such that the sulfonic acid group is converted into a sulfonic acid ester group. From the viewpoint of generating the polymerization reaction well, the form in which the ion conductive group is protected is preferable.

On the other hand, in the case of forming the segment having an ion conductive group by introducing the ion conductive group after the polymerization, the same polymerization reaction as described above is generated by using a compound having an arylene group that does not have an ion conductive group (cation exchange group) as Ar¹¹ in the compound represented by the formula (3), and then the ion conductive group is bonded to the arylene group represented by Ar¹¹. Such method can be performed according to, for example, the method described in Japanese Patent Application Laid-Open No. 2003-31232.

The condensation reaction in a synthesis method of these polyarylene based block copolymers can be performed by, for example, the method described in Prog. Polym. Sci., 1153-1205 (17) 1992. Such condensation reaction can especially suitably occur under the existence of a transition metal complex. Examples of the transition metal complex include a nickel complex, a palladium complex, a platinum complex, and a copper complex. Among them, a zero-valence transition metal complex is preferable such as a zero-valence nickel complex and a zero-valence palladium complex.

The condensation reaction can be performed in a solvent. An example of a method of taking out the block copolymer from the reacted mixture after the reaction is a method of depositing the block copolymer by adding a poor solvent of the block copolymer after the reaction is completed and then performing filtration, and the like. The resultant block copolymer may be purified by washing or performing re-precipitation with a good solvent and a poor solvent.

### (Producing Method of the Polymer Electrolyte Membrane)

Next, preferred producing method of the polymer electrolyte membrane will be explained. The polymer electrolyte membrane can be produced by applying a solution where the polymer electrolyte is dissolved into a solvent onto a prescribed substrate (coating step) and by evaporating and removing the solvent from the film by solution that is applied (a coated film) (an evaporating step). The polymer electrolytes of the embodiment can be applied as the polymer electrolyte especially without limitation. However, especially in the case of using the polymer electrolyte containing the block copolymer containing the repeated structure represented by the formulas (1) and (2), the preferred polymer electrolyte membrane as described later tends to be easily obtained with the present method.

The application of the solution containing the polymer electrolyte onto the substrate in the coating step can be performed with a cast method, a dip method, a grade coat method, a spin coat method, a gravure coat method, a flexographic printing method, an inkjet method, and the like. The size and thickness of the coated film obtained in this coating step is desirably appropriately optimized depending on capability, shape, size, and the like of an apparatus used in the evaporating step. Specifically, the coating condition in the coating step is preferably optimized so as to keep a uniform state of the distribution of solvent remaining amount in the coated film by making the evaporation of the solvent from the coated film relatively uniform in the evaporating step.

The material of the substrate in which the solution is applied is preferably one that is chemically stable and is insoluble to the solvent to be used. The substrate is more preferably one in which the obtained membrane can be easily washed after the polymer electrolyte membrane is formed and peeling of this membrane is easy. Examples of such substrates include a plate and a film made from glass, polytetrafluoroethylene, polyethylene, and polyester (polyethyleneterephthalate, and the like)

As a substrate, one that is seamless and long in the surface direction is preferably used. When such substrate is used, productivity is high because a long polymer electrolyte membrane can be easily formed, which is industrially advantageous. For example, the length of at least one direction is preferably 1 m or more, more preferably 5 m or more, and further preferably 10 m or more. Thus, the productivity of the polymer electrolyte membrane can be made even higher. In the case of using the substrate with a seam, it is difficult to form a coated film having uniform thickness, the solvent is evaporated from the coated film nonuniformly in the evaporating step, and the characteristics tend to easily be poor compared with the case of using a seamless substrate.

The solvent used in the solution containing the polymer electrolyte is preferably one that is capable of dissolving the polymer electrolyte and that can easily removed by evaporation after coating. Such preferred solvent is preferably appropriately selected depending on the structure of the polymer electrolyte or the like.

Examples of the solvent include a non-protonic polar solvent such as N,N-dimethylformamide, N,N-dimethylacetoamide, N-methyl-2-pyrrolidone, and dimethylsulfoxide; a chlorine based solvent such as dichloromethane, chloroform, 1,2-dichloroethane, chlorobenzene, and dichlorobenzene; an alcohol solvent such methanol, ethanol, and propanol; and an alkylene glycol monomethylmonoalkylether based solvent such as ethylene glycol monomethylether, ethylene glycol monoethylether, propylene glycol monomethylether, propylene glycol monomethylether, and propylene glycol monoethylether. These may be used alone or in combination of two or more types.

More specifically, in the case of using a polymer electrolyte containing the block copolymer containing the repeated structure represented by the formulas (1) and (2), the solvent is preferably N,N-dimethylformamide, N,N-dimethylacetoamide, N-methyl-2-pyrrolidone, and dimethylsulfoxide, more preferably dimethylsulfoxide and N,N-dimethylacetoamide, and especially preferably dimethylsulfoxide.

In the evaporating step, the time from start to completion of the evaporation of the solvent (hereinafter referred to as "the evaporation time") is set to be 60 minutes or less. This evaporation time is a time while a concentration change of the polymer electrolyte occurs in the coated film or the polymer electrolyte membrane that is formed from it during the evaporating step. The measurement of the concentration change of the polymer electrolyte can be herein performed by periodically picking up a part of the coated film or the polymer electrolyte membrane in the evaporating step and measuring its concentration.

Specifically, this evaporation time can be set to be a time that the mass change of a part having constant area substantially occurs in the coated film or the polymer electrolyte membrane that is formed from it during the evaporating step, for example. In this case, whether the mass change occurs or not can be confirmed by periodically picking up a part having a constant area of the coated film or the polymer electrolyte membrane during the evaporating step and measuring its mass. Actually, for example, by noting the point that the coated film is applied and formed as the point of start of the evaporation of the solvent, and noting the faster of the point that the concentration change or the mass change of the polymer electrolyte does not substantially occur and the point that the evaporating step is finished as the point of completion of the evaporation of the solvent, the evaporation time may be considered to be the time from start to completion of the evaporation. The phrase "a concentration change of the polymer electrolyte membrane does not substantially occur" means that the differential of the concentration of the polymer electrolyte membrane before and after a prescribed time (the change amount) cannot be detected (less than 0.1% by mass). In the same manner, the phrase "a mass change of the polymer electrolyte membrane does not substantially occur" means that the differential of the mass of the polymer electrolyte membrane before and after a prescribed time (the change amount) cannot be detected (less than 0.1% by mass).

The evaporation time is preferably 55 minutes or less, and more preferably 40 minutes or less. The lower limit of the evaporation time is preferably set to be 10 seconds. With such evaporation time, a polymer electrolyte membrane can be formed having a preferred structure of the near surface region as described later. The evaporation time can be adjusted by appropriately setting the condition such as temperature, pressure, and ventilation in the evaporating step.

Among them described above, as the solvents used in the evaporating step, one having a boiling point of 120°C to 250°C at 1 atmospheric pressure is preferable, that of 130°C to 220°C is more preferable, and that of 150°C to 200°C is further preferable. These preferred boiling points may differ slightly depending on the type of the polymer electrolyte membrane.

The temperature condition in the evaporating step is preferably set to a temperature that is a temperature equal to or more than the freezing point of the solvent and a temperature 50°C higher than the boiling point or less. When the temperature condition in the evaporating step is less than this, the evaporation of the solvent hardly occurs. On the other hand, when it exceeds this temperature, nonuniform evaporation of the solvent occurs, it tends to be difficult to obtain the desired structure of the near surface region, and the outward appearance of the polymer electrolyte membrane tends to deteriorate. Therefore, the temperature condition is preferably set so that the evaporation time can be obtained in such preferred temperature range.

From the viewpoint of more easily obtaining a polymer electrolyte membrane having a preferred structure, the upper limit of the temperature in the evaporating step is preferably set to be a temperature 10°C lower than the boiling point of the solvent, and more preferably a temperature 30°C lower than the boiling point of the solvent. The lower limit is preferably set to be 20°C. For example, when the solvent is dimethylsulfoxide, the temperature in the evaporating step is preferably 30 to 150°C, more preferably 40 to 120°C, further preferably 40 to 110°C, and especially preferably 50 to 100°C.

### (Polymer Electrolyte Membrane)

Next, the polymer electrolyte membrane according to the preferred embodiment will be explained.

The polymer electrolyte membrane of the present embodiment can be preferably obtained according to the producing method in the embodiment. Such polymer electrolyte membrane is a membrane constituted by a polymer electrolyte, and has a micro phase separation structure containing a region (micro domain) having an ion conductive group and a region (micro domain) not having an ion conductive group. When the polymer electrolyte contains the block copolymer in the above-described embodiment, the region having an ion conductive group is mainly configured with a segment having the ion conductive group in the block copolymer, and the region not having an ion conductive group is mainly configured with a segment not having the ion conductive group in the block copolymer.

The preferred thickness of this polymer electrolyte membrane is 10 to 300 µm. If this thickness is 10 µm or more, a practically sufficient strength can be easily obtained. If it is 300 µm or less, the film resistance is small, and high output tends to be obtained in the case of applying to a fuel cell. The thickness of the polymer electrolyte membrane can be adjusted by changing the coating thickness when the solution is applied in the producing method.

In the polymer electrolyte membrane of the present embodiment, the first passthrough critical value in the membrane thickness direction obtained at a cross-section along the membrane thickness direction in its near surface region is less than or equal to the second passthrough critical value in the membrane surface direction obtained at the same cross-section. The first and second passthrough critical values are obtained as follows.

First, the first passthrough critical value can be obtained according to the following operations 1 to 5. In operation 1, a cross-section in the direction along the thickness in the near surface region of the polymer electrolyte membrane is observed, and a shaded image is obtained having a shade that corresponds to the amount of the ion conductive group in its cross-section.

In this observation, a thin sample having a cross-section to be observed is cut out from the polymer electrolyte membrane, and staining is performed on this thin sample. The staining is preferably performed by electron staining. The electron staining can be performed so that a shaded image that corresponds to the amount of the ion conductive group present in the cross-section can be observed. Examples of the electron staining method that can be performed include a method of using iodine, a method of using lead acetate, a method of using osmium, and a method of using ruthenium.

The shaded image can be obtained by performing an observation of the cross-section after staining with a microscope such as a transmission electron microscope, a reflection electron microscope, and an atomic force microscope, and various simulation methods such as a molecular dynamic method and a dissipative particle dynamic method. In the case of the polymer electrolyte membrane having the micro phase separation structure as described above, a transmission electron microscope is preferably used because a large contrast that corresponds to the shade can be obtained. The magnification in the case of using the transmission electron microscope is not particularly limited, but, it is preferably about 10000 times to 100000 times, more preferably about 30000 times to 70000 times, and further preferably about 50000 times. With such magnification, the micro phase separation structure can be observed well.

In operation 2, the shaded image obtained by the observation is divided so that a constant unit region is repeated with electronic image processing using a computer for example, and the shading variable that corresponds to the degree of the shade of its unit region is given to each unit region.

In the image processing of the shaded image, first, a region that is suitable for the measurement is preferably cut out from the shaded image that is obtained by the observation. The shaded image after cutting out is preferably an image in a range surrounded by two sides that are at least perpendicular to the thickness direction (parallel to the membrane surface direction) of the polymer electrolyte membrane and are facing each other, and it is more preferably an image in a range surrounded by a quadrangle consisting of these two sides and two sides that are perpendicular (along with the membrane thickness direction) to these, preferably a square.

The size of the shaded image is preferably as large as possible from the viewpoint of decreasing the error in the first passthrough critical value. However, if it is too large, the calculation of the first passthrough critical value tends to be troublesome. Then, from the viewpoint of calculating the first passthrough critical value easily and with less error, when the shaded image is an image showing the region surrounded by a quadrangle as described above, the length of the one side is preferably 10 times or more, more preferably 20 times or more, and further preferably 40 times or more of the shorter length of the average lengths of two main micro domains in the micro phase separation structure (hereinafter referred to as "micro domain length").

The shaded image can be divided into a lattice for example. In this case, each unit region divided by the lattice constitutes each one pixel. The division of the shaded image is preferably performed as minutely as possible to make the error small. However, if it is too minute, the calculation of the first passthrough critical value tends to be troublesome. Then, the shaded image is preferably divided so that the length of one side of each pixel becomes preferably 1/10 or less, and more preferably 1/20 or less of the micro domain length.

The shading variable is a value in which the degree of shade of each region is converted to numerical value data. For example, it can be set by defining the darkest unit region to 0 and the lightest unit region to 255, and giving an integer from 0 to 255 corresponding to the degree of shade of each unit region. The way of setting this numerical value is not necessarily limited thereto, and the maximum and minimum numerical values that are given to the dark region and the light region may be reversed for example.

In operation 3, binarization is performed of classifying each of the unit regions where the shading variable is given into two types of a first unit region having a shading variable on the side where there are more ion conductive groups than the standard value and a second unit region having a shading variable on the side where there are fewer ion conductive groups than the standard value by setting an appropriate shading variable as the standard value. The shaded image obtained after this classification is an image configured with only two types of pixel of the first unit region and the second unit region (hereinafter referred to as "a binarized image").

For example, in the case of giving the shading variables of 0 to 255 according to the above-described example when the staining is performed with an electron staining method, the higher the concentration of the ion conductive group, the darker it is, and the shading variable of a small numerical value is given. Because of this, in this example, a unit region having a smaller shading variable than the standard value is classified into the first unit region.

In operation 4, a value on the side where there are the most ion conductive groups when the image becomes a binarized image (classification) such that the first unit region is continuously arranged so as to connect the two sides facing to the membrane thickness direction is obtained as the standard value in the binalization described above (such value is hereinafter referred to as "the binarized standard value"). When the binarized image is an image having the quadrangle as described above, for example, the two sides facing in the membrane thickness direction are two sides that are perpendicular to the membrane thickness direction among four sides configuring this quadrangle.

In the binarized image, if the standard value is changed, the number of the first unit regions and the number of the second unit regions change relatively along with it. For example, as the shading variable being the standard value is a value on the side where there are fewer ion conductive groups, the number of the first unit regions is relatively larger.

Then, as the shading variable being the standard value is gradually changed from the side where there are more ion conductive groups to the side where there are fewer ion conductive groups, the number of the first unit regions gradually increases relatively. With this, the ratio of the first unit regions that are continuously arranged (side by side) as the unit region increases. If the first unit regions that are arranged one after another are assumed to be one region as a whole (a continuous region), the number of the first unit regions increases by changing the standard value as described above, and therefore this continuous region gradually is longer (or larger). Then, this continuous region comes in contact with both of the two sides that are positioned at both ends in the membrane thickness direction in the binarized image (shaded image) with the shaded variable of the standard value as the borderline. The standard value being the borderline is a value that corresponds to the binarized standard value.

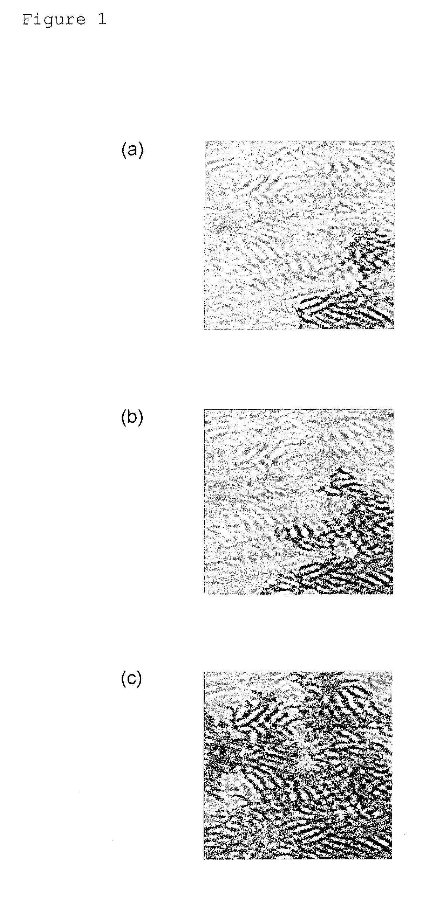

One example of the change of the binarized image in the case of changing the standard value is shown in Fig. 1. Fig. 1 is a drawing showing a binarized image obtained when a prescribed standard value is set. In Fig. 1, the darkest region shows the largest continuous region of the continuous regions of the first unit regions, the next darkest (grey) region shows the first unit regions other than this, and the white region shows the second unit regions. In Fig. 1, the standard value on the side where there are more ion conductive groups is set in order of Fig. 1 (a), Fig. 1 (b), and Fig. 1 (c).

As shown in the drawings, as the number of the first unit regions increases in order of Fig. 1 (a), Fig. 1 (b), and Fig. 1 (c), the continuous region is larger. Then, in Fig. 1 (c), this continuous region is in a state of contacting to both top and bottom sides. This state in Fig. 1 (c) corresponds to a state in which the first unit regions are continuously arranged so as to connect two sides that are approximately perpendicular to the membrane thickness direction and facing each other.

Then, in operation 5, the first passthrough critical value is calculated from the binarized value in the case of setting the binarized standard value as the standard value. That is, first, the numbers of the first and second unit regions in the binarized image at this time are counted. Then, the first passthrough critical value is calculated by substituting these values in the following formula.

### First Passthrough Critical Value = (Number of First Unit Regions/Total Number of the First and Second Unit Regions)

On the other hand, the second passthrough critical value can be obtained as in the first passthrough critical value except for performing the following operations 6 and 7 in place of the operations 4 and 5.

That is, in operation 6, the value on the side where there are the most ion conductive groups when being a binarized image (classification) such that the first unit region is continuously arranged so as to connect the two sides facing the membrane surface direction is obtained as the binarized standard value. When the binarized image is an image having the quadrangle as described above for example, the two sides facing the surface direction are two sides that are perpendicular to the membrane surface direction of four sides configuring this quadrangle.

Then, in operation 7, the second passthrough critical value is calculated from the binarized value in the case of applying the binarized standard value obtained in operation 6. The second passthrough critical value can be calculated by counting the numbers of the first and the second unit regions in this binarized image and substituting these values in the following formula.

### Second Passthrough Critical Value = (Number of First Unit Regions/Total Number of the First and Second Unit Regions)

The first and the second passthrough critical values can be obtained in such way, and a series of operations of obtaining each passthrough critical value from the shaded image obtained in operation 1 can be performed with an electronic process using a computer. For example, these operations can be performed using software where an algorithm is incorporated as described in "pa-kore-shonn no kagaku" written by Takashi Odagaki, Shokabo, p.22-23.

The reason for the correlation of the passthrough critical value with the ion conductivity of the polymer electrolyte membrane is not yet clear. However, it can be supposed as follows. That is, a small passthrough critical value means that the continuous region that passes through the shaded image in a fixed direction (the membrane thickness or the membrane surface direction) can be formed with a small number of first unit regions, and it is considered to reflect that the ion conductive groups are efficiently arranged in its direction.

In such polymer electrolyte membrane, the first passthrough critical value in the near surface region is preferably 0.55 or less, more preferably 0.53 or less, and further preferably 0.51 or less. Thus, the ion conductivity in the thickness direction of the polymer electrolyte membrane is better.

With the polymer electrolyte membrane, in the region outside the range of the near surface region, the first passthrough critical value is preferably 0.55 or less, more preferably 0.53 or less, further preferably 0.51 or less, even more preferably 0.45 or less, and especially preferably 0.40 or less. In this case, the region having the ion conductive group is in a state of being arranged along the membrane thickness direction in an even deeper position than the near surface region. As a result, the ion conductivity in the membrane thickness direction improves even more.

### (Fuel Cell)

Next, the fuel cell of the preferred embodiment will be explained. This fuel cell is provided with the polymer electrolyte membrane of the above-described embodiment.

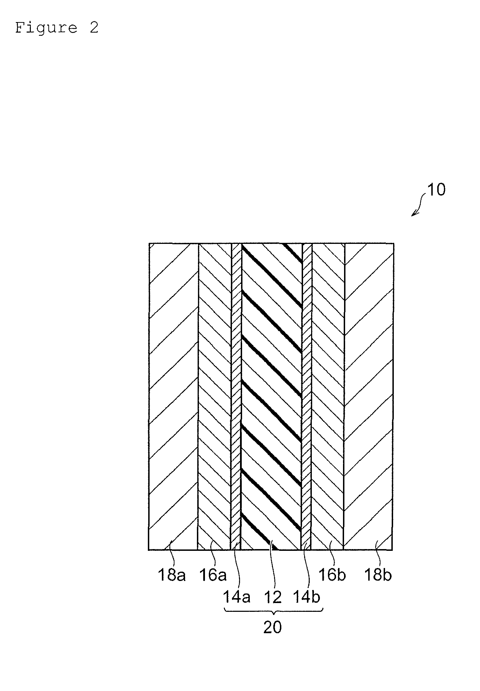

Fig. 2 is a drawing schematically showing the cross-sectional configuration of the fuel cell of the present embodiment. As shown in Fig.2, in a fuel cell 10, catalyst layers 14a and 14b, gas diffusion layers 16a and 16b, and separators 18a and 18b are formed one by one on both sides of a polymer electrolyte membrane 12 (a proton conductive membrane) consisting of the polymer electrolyte membrane of the above-described preferred embodiment so as to sandwich it. A membrane-electrode assembly (hereinafter abbreviated as "MEA") 20 is configured from the polymer electrolyte membrane 12 and one pair of the catalyst layers 14a and 14b sandwiching it.

The catalyst layers 14a and 14b adjacent to the polymer electrolyte membrane 12 are layers that function as electrode layers in the fuel cell, either one of them is an anode electrode layer, and the other is a cathode electrode layer. Such catalyst layers 14a and 14b are configured from a catalyst composition containing a catalyst, and further preferably contain the polymer electrolyte of the above-described embodiment.

The catalyst is not particularly limited as long as it can activate an oxidation reduction reaction with hydrogen or oxygen, and examples thereof include a noble metal, a noble metal alloy, a metal complex, and a metal complex baked material that is formed by baking the metal complexes. Among them, fine particles of platinum are preferable as the catalyst, and the catalyst layers 14a and 14b may be one where fine particles of platinum are carried on particulate or fibrous carbon such as activated carbon and graphite.

The gas diffusion layers 16a and 16b are provided to sandwich both sides of the MEA 20, and promote the diffusion of raw material gas into the catalyst layers 14a and 14b. These gas diffusion layers 16a and 16b are preferably configured from a porous material having electron conductivity. For example, a porous carbon non-woven fabric and a carbon paper are preferable because the raw material gas can be effectively transported into the catalyst layers 14a and 14b.

A membrane-electrode-gas diffusion layer assembly (MEGA) is configured from these polymer electrolyte membrane 12, catalyst layers 14a and 14b, and gas diffusion layers 16a and 16b. Such MEGA can be manufactured with the method shown below. That is, first, slurry of catalyst composition is formed by mixing a solution containing a polymer electrolyte and a catalyst. This is applied onto a carbon non-woven fabric, a carbon paper, or the like to form the gas diffusion layers 16a and 16b with a spray or a screen printing method, and a layered body is obtained in which a catalyst layer is formed on the gas diffusion layer by evaporating a solvent, and the like. Then, one pair of the layered bodies obtained is arranged so that each of the catalyst layers is facing to each other, the polymer electrolyte membrane 12 is arranged between them, and these are adhered with pressure. In such way, the MEGA having the structure is obtained. The formation of the catalyst layer onto the gas diffusion layer can be performed by forming the catalyst layer by applying the catalyst composition onto a prescribed substrate (such as polyimide and polytetrafluoroethylene) and drying this, and then transferring this to the gas diffusion layer with a heat press.

The separators 18a and 18b are formed with a material having electron conductivity, and examples of such material include carbon, resin molded carbon, titanium, and stainless steel. In such separators 18a and 18b, a groove being a flow path for fuel gas and the like is preferably formed on the catalyst layers 14a and 14b sides (not shown in the drawing).

Then, the fuel cell 10 can be obtained by sandwiching the MEGA with one pair of the separators 18a and 18b and joining them.

Moreover, the fuel cell is not necessarily limited to one having the configuration, and may have a different configuration appropriately. For example, the fuel cell 10 may be a fuel cell where the fuel cell having the structure is sealed with a gas sealer and the like. Furthermore, the fuel cell 10 with the structure can be subjected to practical use as a fuel cell stack by connecting a plurality of the cells in series. The fuel cell having such configuration can operate as a polymer electrolyte fuel cell when the fuel is hydrogen, and can operate as a direct methanol fuel cell when the fuel is a methanol solution.

### (Evaluation Method of Ion Conductivity)

The first and the second passthrough critical values in the near surface region of the polymer electrolyte membrane can be applied to an evaluation method of the ion conductivity, especially the ion conductivity in the thickness direction, of an unknown polymer electrolyte membrane.

That is, first, the first and the second passthrough critical values in the near surface region of the polymer electrolyte membrane are calculated. The first passthrough critical value can be obtained with operations 1 to 5 described above, and the second passthrough critical value can be obtained with operations 1 to 3, 6, and 7 described above.

The first passthrough critical value and the second passthrough critical value thus obtained are then compared. If the first passthrough critical value is smaller than the second passthrough critical value, the polymer electrolyte can be judged to have excellent ion conductivity in the membrane thickness direction, and if the first passthrough critical value is larger than the second passthrough critical value, the polymer electrolyte can be judged that the ion conductivity of the polymer electrolyte membrane in the thickness direction is insufficient.

The preferred embodiment of the present invention has been explained above, but the present invention is not necessarily limited to these embodiments, and a change may be appropriately performed within a range without deviating from the purpose of the present invention.

For example, in the polymer electrolyte membrane of the present invention, the first passthrough critical value and the second passthrough critical value satisfy the relationship as described above in the near surface region. However, the near surface region of both surfaces of the membrane does not necessarily satisfy such relationship, and at least one surface side may satisfy such relationship. However, the first passthrough critical value and the second passthrough critical value further preferably satisfy the relationship as described above in the near surface region of both surfaces because particularly excellent ion conductivity in the membrane thickness direction can be obtained.

The polymer electrolyte membrane of the present invention does not necessarily satisfy the relationship between the first passthrough critical value and the second passthrough critical value as described above in the entire region that corresponds to the near surface region, and there is a case that a cross-section that does not satisfy such relationship may be locally observed even in the near surface region. However, in the cross-section observation using a transmission electron microscope as in the above-described embodiment, the first passthrough critical value and the second passthrough critical value particularly preferably satisfy the relationship as described above in the shaded image obtained in the entire cross-section observed at random.

The present invention will be explained in more detail with examples below. However, the present invention is not limited to these examples.

### [Synthesis of Polymer Electrolyte]

### (Synthesis Example 1)

First, 88.3 g (352.9 mmol) of 4,4'-dihydroxyphenylsulfone, 53.6 g (388.1 mmol) of potassium carbonate, 693 mL of dimethylsulfoxide, and 139 mL of toluene were charged into a flask equipped with a distillation tube and stirred under a nitrogen atmosphere. Subsequently, moisture was removed by azeotropic distillation with toluene by raising the temperature of this solution to 135°C and maintained the solution at this temperature for 3 hours. This solution was allowed to stand to cool, 84.9 g (333.9 mmol) of 4,4'-difluorodiphenylsulfone was added thereto, the temperature was raised to 135°C, and the reaction was performed at this temperature for 7 hours. The solution after this reaction was defined as a reaction solution 1.

Further, 36.0 g (157.7 mmol) of potassium hydroquinonesulfonate, 22.9 g (165.6 mmol) of potassium carbonate, 491 mL of dimethylsulfoxide, and 98 mL of toluene were added in a flask equipped with a distillation tube and stirred under a nitrogen atmosphere. This solution was allowed to stand to cool, 86.7 g (176.6 mmol) of 4,4'-difluorodiphenylsulfone-3,3'-dipotassium disulfonate was added thereto, the temperature was raised to 135°C, and the reaction was performed at this temperature for 7 hours. The solution after this reaction was defined as a reaction solution 2.

Then, the reaction solution 1 and reaction solution 2 were mixed while diluting with 30 mL of dimethylsulfoxide, and this mixed solution was heated at 130°C for 1 hour and at 140°C for 8 hours.

After the solution after heating was allowed to stand to cool, this was dropped into a large amount of 4 N hydrochloric acid, and a precipitant produced with this process was collected by filtering. Washing with water and filtering were repeated until the washing liquid was turned to neutral. Then, a polymer electrolyte was obtained by performing a 2 hour process of the precipitant with a large excess amount of hot water and then reducing pressure and drying.

Then, the polymer electrolyte was once made into a form of a polymer electrolyte membrane by dissolving the obtained polymer electrolyte into 1-methyl-2-pyrrolidone so that the concentration was 24% by weight, casting and applying this solution onto a glass plate, and drying at normal pressure at 80°C. This polymer electrolyte membrane was soaked in 1 mol/L of hydrochloric acid for 2 hours, and a process was performed of washing with flowing water for 2 hours. The obtained polymer electrolyte membrane was in a state that substantially all of the sulfonic acid groups are in a free acid form (that is, the salt substitutional rate was about 0%.)

### [Producing of Polymer Electrolyte Membrane]

### (Example 1)

A polymer electrolyte solution having a concentration of 10% by weight was obtained by dissolving the polymer electrolyte membrane obtained in Synthesis Example 1 in dimethylsulfoxide. Subsequently, a coated film was formed by continuously casting and applying this polymer electrolyte solution onto a polyethyleneterephthalate (PET) film under a normal pressure. At this time, dimethylsulfoxide being a solvent was evaporated by heating between 50°C and 100°C. The solvent was further removed by washing the coated film with ion exchange water after standing it to cool. A polymer electrolyte membrane having a thickness of about 30 µm and a micro phase separation structure was obtained by further soaking this coated film in 2 N hydrochloric acid for 2 hours and then washing again with ion exchange water.

During evaporating the solvent, the time when the concentration change of the coated film occurred was measured by performing an operation of measuring the concentration of the polymer electrolyte with time by sampling the coated film, and this was defined to the time from start to completion of the evaporation (evaporation time). As a result, the evaporation time was 40 minutes.

### (Example 2)

A polymer electrolyte solution having a concentration of 10% by weight was obtained by dissolving the polymer electrolyte membrane obtained in Synthesis Example 1 in dimethylsulfoxide. Subsequently, a coated film was formed by continuously casting and applying this polymer electrolyte solution onto a polyethyleneterephthalate (PET) film under a normal pressure. At this time, dimethylsulfoxide being a solvent was evaporated by heating between 60°C and 100°C. Then, the solvent was further removed by washing with ion exchange water. A polymer electrolyte membrane having a thickness of about 30 µm and a micro phase separation structure was obtained by further soaking this coated film in 2 N hydrochloric acid for 2 hours and then washing again with ion exchange water. The evaporation time in such step was measured in the same way, and the evaporation time was 33 minutes.

### (Comparative Example 1)

A polymer electrolyte solution having a concentration of 10% by weight was obtained by dissolving the polymer electrolyte membrane obtained in Synthesis Example 1 in dimethylsulfoxide. Subsequently, a coated film was formed by casting and applying the obtained solution onto a glass plate. At this time, dimethylsulfoxide being a solvent was evaporated from the coated film by heating at 80°C. After that, the solvent was further removed by washing with ion exchange water. This coated film was soaked in 2 N hydrochloric acid for 2 hours and washed again with ion exchange water. In this way, a polymer electrolyte membrane having a thickness of about 30 µm and a micro phase separation structure was obtained. The evaporation time in such step was measured in the same way, and the evaporation time was 120 minutes.

### (Comparative Example 2)

A polymer electrolyte solution having a concentration of 10% by weight was obtained by dissolving the polymer electrolyte membrane obtained in Synthesis Example 1 in dimethylsulfoxide. Subsequently, a coated film was formed by casting and applying the obtained solution onto a PET film. At this time, dimethylsulfoxide being a solvent was evaporated from the coated film by heating at 80°C. After that, the solvent was further removed by washing with ion exchange water. This coated film was soaked in 2 N hydrochloric acid for 2 hours and washed again with ion exchange water. In this way, a polymer electrolyte membrane having a thickness of about 54 µm and a micro phase separation structure was obtained. The evaporation time in such step was measured in the same way, and the evaporation time was 120 minutes.

### [Measurement of First and Second Passthrough Critical Values]

Using each of the polymer electrolyte membranes in Examples 1 and 2 and Comparative Examples 1 and 2, the first passthrough critical value (Tz) and the second passthrough critical value (Txy) in the near surface region of these membranes were measured. That is, first, these polymer electrolyte membranes were soaked in a solution for staining containing 15% potassium iodinate and 5% iodine at room temperature for 30 minutes, and then were embedded by an epoxy resin that has been preparatory cured.

Then, a cut piece of thickness 60 nm was cut out from this polymer electrolyte membrane under a dry method condition with a microtome. At this time, the cutting out was performed so that the surface was a cross-section along the thickness direction. The cut piece thus obtained was sampled onto a Cu mesh, and the surface was observed with a transmission electron microscope (H9000NAR manufactured by Hitachi, Ltd.) at an acceleration voltage of 300 kV (above, operation 1).

Then, the shaded image obtained by the observation with the transmission electron microscope was allowed to read into a personal computer, and only the necessary part was cut out from the obtained image file. At this time, the surface of the polymer electrolyte membrane (the surface of the cut piece) was rotated to be leveled in the display.

Image processing was performed of dividing this cut out shaded image into a lattice, and a square shaded image was obtained in which one side had 800 unit regions (pixels). The length of the micro domain in the polymer electrolyte membrane was 17 nm. This length corresponds to 20 pixels in the divided shaded image. In such way, the shaded image after the image processing has resolution in which each pixel was 1/20 of the length of the micro domain, and the length of one side was set to be 40 times or more of the length of the micro domain.

In the image processing, a shading variable was given to each pixel depending on the level of its shade while performing the division. Specifically, by defining the case that the pixel is pure black to 0 and the case of pure white to 255, a shading variable (an integer) from 0 to 255 was given to each pixel depending on the level of the shade (above, operation 2).

Then, by performing operations 3 to 5 or operations 3, 6, and 7 by using the shaded image in which the image processing was performed, the first passthrough critical value (Tz) and the second passthrough critical value (Tx) in the near surface region of each polymer electrolyte membrane were obtained. The obtained values are shown in the following Table 1. For reference, Tz and Txy in the region other than the range of the near surface region (a deeper region than the near surface region) were also calculated in the same way as described above except that the measurement cross-section was changed. These values are shown together in Table 1 as the first and the second passthrough critical values in the inside region.

### [Measurement of Conductivity in the Thickness Direction]

The ion conductivity in the thickness direction was measured on each of the polymer electrolyte membranes in Examples 1 and 2 and Comparative Examples 1 and 2 according to the method shown below. That is, first, two cells for measurement were prepared in which a carbon electrode was pasted on one side of a silicon rubber (thickness 200 µm) having an opening of 1 cm², and they were arranged so that the carbon electrodes are facing to each other. Then, terminals of a direct impedance measurement apparatus were connected to the cells for measurement.

Then, the polymer electrolyte membrane was sandwiched between the cells for measurement, and a resistance value between two cells for measurement was measured at a measurement temperature of 23°C. Subsequently, the resistance value was measured again in a state in which the polymer electrolyte membrane was removed.

Then, the resistance value obtained in a state of having the polymer electrolyte membrane and the resistance value obtained in a state of not having the polymer electrolyte membrane were compared, and a resistance value in the thickness direction of the polymer electrolyte membrane was calculated based on the difference between these resistance values. Then, the ion conductivity in the membrane thickness direction was obtained from the resistance value in the thickness direction thus obtained. The measurement was performed in a state in which 1 mol/L of dilute sulfuric acid was contacted to both sides of the polymer electrolyte membrane. The obtained result is shown in Table 1 with Tz and Txy values of each polymer electrolyte membrane obtained from the measurements described above.

**Table 1**

| | Near Surface Region | | Region Outside the Range of the Near surface region | | ION CONDUCTIVITY in the membrane thickness direction (S/cm) |
|---|---|---|---|---|---|
| | Tz | Txy | Tz | Txy | |
| Example 1 | 0.548 | 0.559 | 0.505 | 0.528 | 0.11 |
| Example 1 | 0.531 | 0.531 | 0.537 | 0.537 | 0.086 |
| Comparative Example 1 | 0.570 | 0.529 | 0.566 | 0.554 | 0.075 |
| Comparative Example 1 | 0.557 | 0.543 | 0.553 | 0.540 | 0.070 |

It was found from Table 1 that excellent ion conductivity in the membrane thickness direction was obtained in Examples 1 and 2 in which the first passthrough critical value (Tz) is the second passthrough critical value (Txy) or less in the near surface region as compared with Comparative Examples 1 and 2 in which Tz was larger than Txy.

## Claims

1. An evaluation method of a ion conductivity of a polymer electrolyte membrane having a micro phase separation structure containing a region having an ion conductive group, comprising:
a step of calculating a first passthrough critical value in the membrane thickness direction obtained at the cross-section along the membrane thickness direction and a second passthrough critical value in the membrane surface direction obtained at the cross-section in the near surface region of the polymer electrolyte membrane; and
a step of comparing the first passthrough critical value and the second passthrough critical value; wherein
the first passthrough critical value is a value shown by the number of first unit regions/the total number of first and second unit regions
when a process is performed of dividing a shaded image having a shade that corresponds to the amount of the ion conductive group obtained by observing the cross-section so that a constant unit region is repeated and of giving a shading variable that corresponds to the level of the shade to each of the unit region, and
when a value on the side where there are the most ion conductive groups is set as the standard value when the unit regions are classified into a first unit region having a shading variable on the side where there are more ion conductive groups than the shading variable corresponds to the standard value and a second unit region having a shading variable on the side where there are fewer ion conductive groups than the shading variable corresponds to the standard value with a prescribed shading variable as the standard value so that the first unit region is continuously arranged to connect two sides that are facing in the membrane thickness direction in the shaded image, and wherein
the second passthrough critical value is a value shown by the number of first unit regions/the total number of first and second unit regions
when a process is performed of dividing a shaded image having a shade that corresponds to the amount of the ion conductive group obtained by observing the cross-section so that a constant unit region is repeated and of giving a shading variable that corresponds to the level of the shade to each of the unit region, and
when a value on the side where there are the most ion conductive groups is set as the standard value when the unit regions are classified into a first unit region having a shading variable on the side where there are more ion conductive groups than the shading variable corresponds to the standard value and a second unit region having the shading variable on the side where there are fewer ion conductive groups than the shading variable corresponds to the standard value with a prescribed shading variable as the standard value so that the first unit region is continuously arranged to connect two sides that are facing in the membrane surface direction in the shaded image.

2. The evaluation method according to claim 1, wherein the shaded image is obtained by staining the polymer electrolyte membrane with an electron staining method and observing with a transmission electron microscope.

3. The evaluation method according to claim 1 or 2, wherein the near surface region is a region of at most 1000 nm depth from the surface.

4. The evaluation method according to any one of claims 1 to 3, wherein the length of at least one direction along the membrane surface direction is 1 m or more and is seamless.

5. The evaluation method according to any one of claims 1 to 4, configured from a polymer electrolyte containing a block copolymer having a segment containing an ion conductive group and a segment not having an ion conductive group.
